(19)

**Europäisches Patentamt**

**European Patent Office**

**Office européen des brevets**

(11) **EP 1 759 878 B1**

(12) **EUROPEAN PATENT SPECIFICATION**

(45) Date of publication and mention
of the grant of the patent:
**05.08.2009 Bulletin 2009/32**

(51) Int Cl.:
***B60B 1/04*** *(2006.01)*     ***B60B 21/06*** *(2006.01)*

(21) Application number: **05018862.2**

(22) Date of filing: **31.08.2005**

(54) **Bicycle spoked wheel, set of spoke connections therefor, and relative manufacturing method**

Speichenrad für Fahrräder, korrespondierende Speichenverbindungen, und korrespondierendes Verfahren

Roue à rayons pour bicyclette, connections de rayon correspondantes, et la méthode de production

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**07.03.2007 Bulletin 2007/10**

(73) Proprietor: **CAMPAGNOLO S.R.L.**
**I-36100 Vicenza (IT)**

(72) Inventors:
• **Passarotto, Maurizio**
**45100 Rovigo (IT)**

• **Urbani, Davide**
**36075 Montecchio Maggiore (Vicenza) (IT)**

(74) Representative: **Bottero, Claudio et al**
**Porta, Checcacci & Associati S.p.A.**
**Via Trebbia, 20**
**20135 Milano (IT)**

(56) References cited:
**US-A- 6 048 035**     **US-A1- 2002 117 889**
**US-A1- 2002 133 635**     **US-A1- 2004 113 484**

**Description**

The present invention concerns in general the field of bicycle spoked wheels, and in particular a wheel, a set of spoke connections, as well as a method for manufacturing the wheel.

A bicycle spoked wheel conventionally comprises a rim, a hub and a set of spoke connections between the rim and the hub.

More specifically, for the connection between rim and hub, it is typically provided a spoke having a widened head at a first end and an outer threading at a second end opposite the first end.

The widened head of the spoke is received in a suitably shaped seat, usually made at the hub or at a flange thereof. In order to allow the extension of the spoke in the radial or substantially radial direction, a bend is typically provided close to the first end of the spoke. The bend of the spoke at the first end can, however, be left out, for example in the case of use of a hub as described in US 2002/0033635.

The threading at the second end of the spoke is threadedly coupled in a threaded hole usually made at the rim or, preferably, in a removable connection element of the nipple type or nut type, which abuts at seating holes in the rim, possibly through the interposition of a plate, as illustrated for example in EP 0 936 085.

Spokes with different attachment means to the rim and to the hub are also known, for example in which the head of the spoke is intended to couple with the rim, and the threading of the spoke is intended to couple with the hub, and the present invention is not limited to any particular type of spoke connection.

In the present invention and in the attached claims, under the expression "spoke connection" it is meant to indicate the assembly of a spoke and possible removable connection elements, such as the aforementioned nipple and interposition plate.

The hub is an element with rotational symmetry with respect to the axis of the bicycle wheel, and the spoke connections are generally so distributed along the circumference of the wheel that the center of mass of them as a whole is at the axis of the wheel. More specifically, the spoke connections can be distributed equally spaced apart, or else groups of two or more spoke connections can be distributed equally spaced apart along the rim.

Due to the different angle of the spoke connections with respect to the median plane of the wheel (camber) between one side and the other of the hub and/or due to a tangential attachment of the spokes to a side of the hub and/or for other reasons in particularly complex spoke patterns, there can be spoke connections of different mass, but still forming regular, with respect to the rotation axis, sub-sets of identical spoke connections. Also in such cases, the center of mass of the set of spoke connections is therefore at the rotation axis of the wheel, in other words the set of spoke connections is balanced with respect to the rotation axis.

The known geometries of rims are such that also the rim is an element with rotational symmetry with respect to the axis of the wheel.

In first analysis, the wheel is therefore dynamically balanced.

In practice, there is however always a cause for imbalance or localized mass increase, consisting of the retaining valve of the air inside the pneumatic tire, be it of the type with an inner tube, of the tubeless type or of the type with a tubular tire. The valve, fixed in a proper hole formed in the rim, is typically made from brass and has standard size and therefore predetermined weight. The slight lightening caused in the rim by the housing hole provided for the valve itself is not sufficient to compensate for the localized mass increase at the valve. On the contrary, in rims obtained by carbon fiber molding, the localized mass increase at the valve is sometimes accompanied, like in Bora wheels marketed by Campagnolo S.r.l., Italy, by a further increase in mass due to the presence of a greater thickness of the rim in such a zone in order to compensate for the weakening of the rim due to the hole for the valve.

The cause for imbalance represented by the valve is accompanied, in the case of metal rims, by a second cause. Indeed, metal rims, in particular made from steel or aluminum alloy, are made through a rod extruded according to the desired section of the rim, said rod then being shaped into a circumference through calendaring. The jointing of the ends of the rod is carried out in various ways, all of which however provide for the addition of material and therefore determine a localized mass increase. For example, known methods for carrying out jointing provide: the insertion with interference of one or more pins in respective holes butt formed in the wall of the ends of the extruded rod; the insertion of a sleeve in an inner chamber of the extruded rod for a certain extent from both ends, possibly with the addition of a gluing substance; the butt welding of the ends, with or without addition of welding material, but in any case with the use of solid metal inserts in the inner chamber of the extruded rod in order to allow for gripping the ends with suitable pincers during welding without the risk of deforming the rim.

Either or both the causes for localized mass increase bring(s) about that the center of mass of the masses of the wheel does not belong to the rotation axis of the wheel. From the dynamic point of view, the imbalance caused by such localized mass increases brings about an unfavourable instability of the wheel. Moreover, given that the imbalance increases as the speed of the wheel increases, it becomes more dangerous precisely when the travel speed is fast, like going downhill, and, on the contrary, a very stable wheel is needed.

In the case of metal rims, to reduce the problem of dynamic imbalance, it is known to make the hole for the valve in a position diametrically opposite the joint of the extruded rod. The balancing of the masses in movement thus obtained is, however, insufficient to provide good stability of the wheel since typically the additional mass in the zone of the joint is different from, normally greater than, the mass of the valve body. Moreover, in the case of wheels with odd spoke patterns, sometimes it is not possible to make the hole for the valve in a position diametrically opposite the joint of the extruded rod, but only in an approximately opposite position since the diametrically opposite position is occupied by a spoke or by a group of spokes. The resultant of the centrifugal forces cannot, therefore, be cancelled out due to the aforementioned mass difference and/or due to the angle that the forces due to the two localized mass increases form between them.

It has also been attempted to solve the problem of balancing in such rims by sticking a plate at the valve hole. By providing an additional element, such a provision is, however, unsatisfactory both from the manufacture point of view and from the point of view of the end product, since, besides increasing the weight of the rim, the plate risks detaching with the use of the bicycle, it is unaesthetic and not aerodynamic.

Moreover, such a plate cannot eliminate the imbalance when it is stuck to a spoke not diametrically opposite the joint of the extruded rod, or the valve if the latter is heavier than the joint. When conversely the plate is stuck between the rim and the tire, its mounting is cumbersome.

European patent application 04425652.7, filed on 31.08.2004 by the present Applicant and still unpublished, discloses a bicycle spoked wheel comprising a hub, a rim and a set of spoke connections connecting the hub and the rim, wherein the masses of the set of spoke connections as a whole are imbalanced with respect to the rotation axis. More precisely, such document discloses a set of spoke connections comprising at least one spoke connection of a different mass from the remaining spoke connections in a sub-set of spoke connections, regular with respect to the rotation axis.

Although such provision allows for actually reducing the dynamic imbalance of the wheel, and possibly to totally eliminate it, its requirement of making spoke connections of different masses and/or to drill different spoke attachment seats in the rim may not be desirable, e.g. in the case of existing wheels.

The technical problem at the basis of the present invention is to devise a further solution to effectively reduce the dynamic imbalance of a bicycle wheel. A more ambitious object is to totally eliminate the dynamic imbalance of a bicycle wheel.

In a first aspect thereof, the invention relates to a bicycle spoked wheel according to claim 1, comprising a hub, a rim and a set of spoke connections connecting the hub and the rim, wherein the positions of the spoke connections of said set are irregularly arranged about the rotation axis of the wheel.

With the imbalance of such an irregularly arranged set of spoke connections, it is possible to partly counterbalance or preferably to compensate for the dynamic imbalance caused by localized mass increase(s) of the wheel, in particular a joint and/or the valve for retaining the air of the pneumatic tire.

The aerodinamics and aesthetic of a traditional wheel are retained, and the spoke connections are securely fixed in the wheel by being connected both to the hub and the rim. Furthermore, spoke connections of a same mass can be used, and one or more spoke connections may easily be added to an existing wheel to upgrade it to a dynamically balanced wheel.

In preferred embodiments, the set comprises a sub-set of spoke connections balanced with respect to the rotation axis and at least one additional spoke connection, that is/are used for compensation.

The balanced sub-set of spoke connections may comprise spoke connections of different length for attachment to either side of the hub and/or of the rim, and/or may comprise groups of closer spoke connections.

Especially when the additional spoke connection/s is/are not tensioned, the wheel may be optimized from the static point of view also.

Preferably, the additional spoke connection/s is/are equal to some or all of the spoke connections of the balanced sub-set. It is thus not necessary to provide for special additional spokes.

The additional spoke connection/s may also have a different mass from some or all of the spoke connections of the balanced sub-set, thus providing a further degree of freedom in balancing the localized mass increase/s of the wheel.

In particular, at least part of the additional spoke connection/s may be made of a material with different specific density from some or all of the spoke connections of the balanced sub-set, e.g. of plastics.

Typically, each spoke connection comprises a spoke and a removable connection element at a first end of said spoke for removable connection with the rim or with the hub.

In such a case, the spoke of the additional spoke connection/s may have a different mass from some or all of the spokes of the spoke connections of the balanced sub-set.

Advantageously, the additional spoke/s may have an intermediate portion having a different cross-sectional area from its end portions. In such a way, all of the end portions of the spokes can be identical and therefore it is not necessary to differentiate the spoke attachment seats provided in the rim and/or in the hub, as well as it is possible to use any removable connection elements all equal to each other.

The intermediate portion can be flattened to obtain an aerodynamic profile of the spoke.

The intermediate portion can be central or closer to an end portion of the spoke at the rim side. By arranging the intermediate portion closer to the rim side, the mass difference shall cause a greater centrifugal or centripetal force, easing the compensation or the partial reduction in imbalances of the wheel due to localized mass increases.

Alternatively or in addition to the spoke, the removable connection element of the additional spoke connection/s may have a different mass from the removable element of some or all of the spoke connections of the balanced sub-set.

Preferably, the removable connection element/s of different mass is/are for connection with the rim. In such a way, the mass difference shall cause a greater centrifugal or centripetal force.

In particular, when each removable connection element comprises an internally threaded element coupled with an outer threading of an end of a spoke, it can be the internally threaded element of the additional spoke connection/s that has a different mass from the internally threaded element of some or all of the spoke connections of the balanced sub-set.

Alternatively or in addition, when each removable connection element comprises an internally threaded element coupled with an outer threading of an end of a spoke and an abutment plate, the abutment plate of the additional spoke connection/s can have a different mass from the abutment plate of some or all of the spoke connections of the balanced sub-set.

Still alternatively, the removable connection element of the additional spoke connection/s can comprise an additional abutment plate with respect to some or all of the spoke connections of the balanced sub-set, which have just one or do not have any.

In particularly simple and effective embodiments, there are just one or two additional spoke connections.

According to some embodiments, the wheel comprises a first localized mass increase at a first position, and said at least one additional spoke connection is/are arranged in the half of the rim opposite the half of the rim centered about said first position, preferably arranged substantially diametrically opposite said first position.

Advantageously, the above embodiments also at least partially compensate for a second localized mass increase, smaller than the first localized mass increase.

This occurs, in particular, when said second localized mass increase is in an infraspoke zone substantially diametrically opposite the first localized mass increase and therefore the two localized mass increases partially compensate for each other.

However, it is possible to carry out an at least partial compensation of two discontinuities or localized mass increases separately.

Thus, when the wheel further comprises a second localized mass increase, smaller than said first localized mass increase, at a second position, said at least one additional spoke connection can be further arranged in the half of the rim opposite the half of the rim centered about said second position, preferably arranged substantially diametrically opposite said second position.

In a second aspect thereof, the invention concerns a method of manufacturing a bicycle spoked wheel, comprising the step of providing a hub, a rim and a set of spoke connections for connection of the rim and the hub, characterized by the step of connecting the spoke connections at irregularly arranged positions about the rotation axis of the wheel to partly counterbalance or to compensate for an imbalance due to at least one localized mass increase of the wheel, so that the wheel is perfectly dynamically balanced.

Preferably, moreover, said connecting step comprises connecting a sub-set of said spoke connections at regularly arranged positions about the rotation axis, and connecting at least one additional of said spoke connections substantially diametrically opposite at least one localized mass increase of the wheel.

Even more preferably, the method further comprises the step of tensioning only the spoke connections at positions regularly arranged.

The step of connecting a sub-set of said spoke connections at regularly arranged positions about the rotation axis may comprise connecting spoke connections in groups of closer spoke connections, the groups being regularly arranged about the rim.

The invention shall be better described hereafter with reference to some embodiments and examples, based upon the attached drawings, wherein corresponding elements are designated by similar reference numerals. In the drawings:

- fig. 1 illustrates a bicycle spoked wheel according to a first embodiment,

- fig. 2 is a partial perspective view of a portion of rim, with a spoke connection coupled,

- fig. 3 is a perspective view of a sleeve for jointing the rim,

- fig. 4 is a cross-sectional view of the sleeve of fig. 3 inserted in the rim,

- fig. 5 is a perspective view of a pair of inserts for jointing the rim,

- fig. 6 illustrates a spoke of increased mass,

- fig. 7 illustrates an alternative spoke of increased mass,

- fig. 8 illustrates a spoke of reduced mass,

- fig. 9 illustrates a bicycle spoked wheel according to a second embodiment, and

- fig. 10 illustrates a bicycle spoked wheel according to a third embodiment.

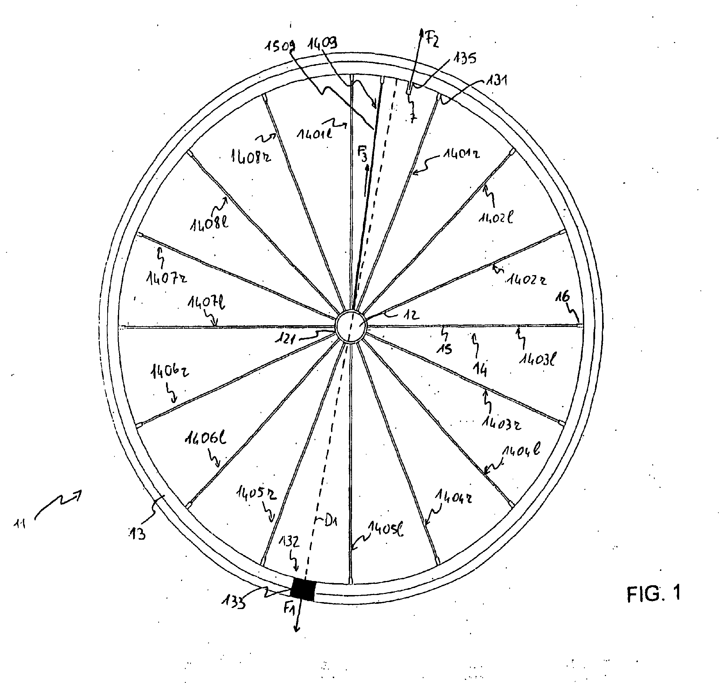

With reference to fig. 1, a view from the right hand side of a wheel 11 according to the invention is shown. The shown wheel 11, in particular a front wheel, has a flanged hub 12, a rim 13 and a set of spoke connections 14 between the hub 12 and the rim 13.

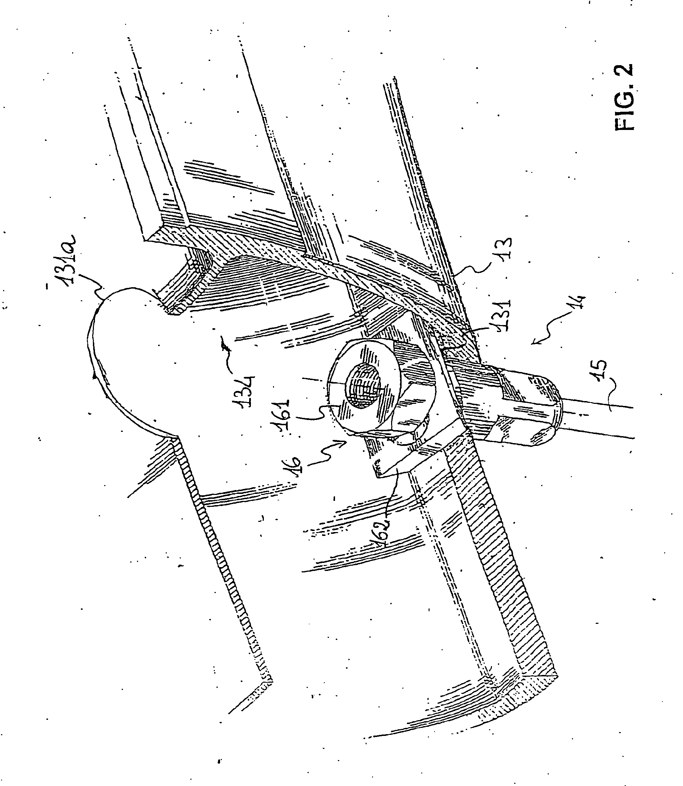

Also with reference to fig. 2, each spoke connection 14 comprises a spoke 15 and a removable connection element 16, which in turn comprises an internally threaded element 161 or nipple and an abutment plate 162, which however can be missing.

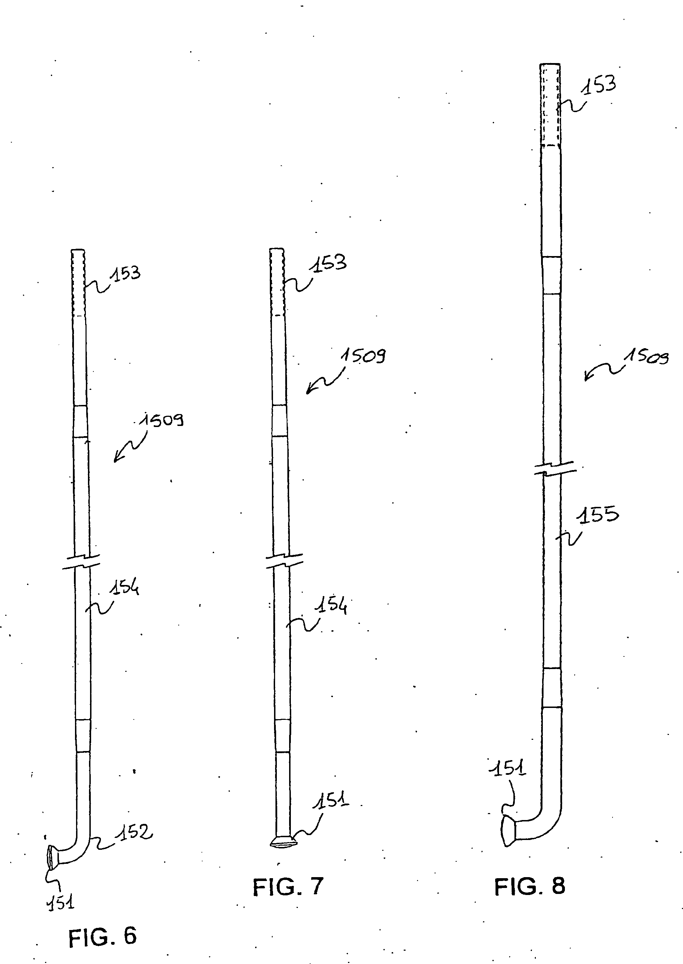

Each spoke 15 has a head 151 at a first end, bent at a bend 152, and an outer threading 153 at a second end, opposite the first end. Such elements of the spoke can be seen more clearly in Figs. 6 and 8, although relative to a special spoke as described hereafter. The bend 152 can be absent in the case of a non-flanged hub attachment, for example as illustrated in US 2002/0033635, incorporated herein by reference. A spoke without bend is also shown in Fig. 7, described in more detail hereinafter.

The head 151 of each spoke is housed in a corresponding seat 121 of the hub 12. The outer threading 153 of the spoke 15 engages in the inner threading of the internally threaded element 161, which abuts against the rim 13 at a respective seat 131, with the interposition of the plate 162. An opening 131a in the upper bridge of the rim 13, for accessing the internally threaded element 161 through a tool, is also shown.

It is alternatively possible to use any alternative configuration of the spoke connections 14, as is well known in the field, for example in which the internally threaded element engages with the hub 12 and the head 151 engages with the rim 13.

The spoke pattern of the wheel 11 may be seen as comprising a regular or balanced sub-set of spoke connections 14011-14081, 1401r-1408r.

The balanced sub-set of spoke connections is of the type with spoke connections 14 distributed equally spaced apart along the circumference of the rim 13.

The balanced sub-set of spoke connections is furthermore of the even type, since it comprises sixteen spoke connections, eight spoke connections 1401r-1408r on the right hand side of the hub 12 and eight spoke connections 14011-14081 on the left hand side of the hub 12.

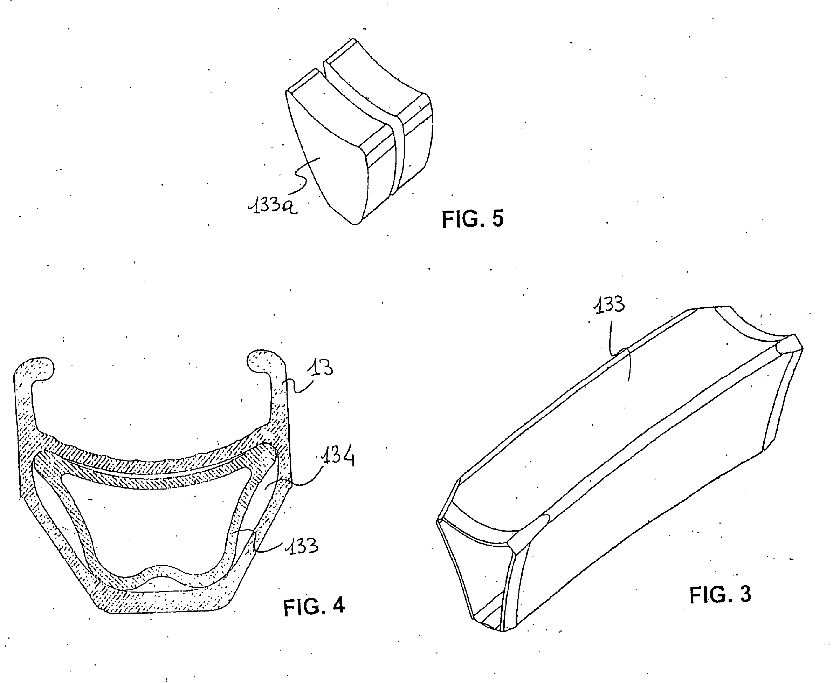

The rim 13 is of the metal type, made through extrusion of a rod with a suitable cross-section, its calendaring and jointing of the ends at a jointing zone 132. The jointing in the zone 132 is carried out through a sleeve 133, illustrated in fig. 3, inserted with interference in the inner chamber 134 of the rim 13, as illustrated in fig. 4, for a certain length from both ends of the extruded and calendared rod. A gluing substance is possibly applied to the sleeve 133 to increase the retaining force.

As an alternative to the sleeve 133, the jointing in the zone 132 can take place through many pins inserted in the wall of the ends of the rim or else by butt-welding of the ends of the extruded and calendared rod. In fig. 5 a pair of solid metal inserts 133a is illustrated, which are inserted into the inner chamber 134 of the rim 13 to allow the ends to be gripped with suitable pincers during welding without the risk of deforming the rim 13.

The sleeve 133, including the possible gluing substance, (or the other equivalent elements in the jointing zone 132) has a mass m1, which represents a mass discontinuity of the wheel 11, in particular a localized mass increase.

In a infraspoke zone diametrically opposite the sleeve 133, in the rim 13 a housing hole 135 is made for a valve 7 for retaining the air in a pneumatic tire (not shown) externally associated with the rim 13. The valve 7 is typically made from brass and represents another mass discontinuity of the wheel 11, in particular a localized mass increase. The localized mass increase due to the presence of the valve 7 minus the local reduction in mass due to the hole 135 for the valve 7 itself shall be indicated for the sake of brevity in the rest of the description as mass m2 of the valve 7. As explained above, the mass m1 is usually different from the mass m2, so that the wheel 1 is dynamically imbalanced, even if jointing zone 132 and the hole 135 for the valve 7 were diametrically opposite. In most cases, the mass m1 of the joint is greater than the mass m2 of the valve and reference shall be made to this assumption in the present embodiment and in the subsequent embodiments.

The hole 135 for the valve 7 is not diametrically opposite the zone 132 of the joint, although in such an opposite position there is none of the seats 131 for the spoke connections. The hole 135 for the valve 7 is instead at a small angle of about 3.75° with respect to the diameter D1 passing through the zone 132 of the joint.

To reduce or even cancel out the imbalance of the wheel 11, according to the present invention, it is provided to use an additional spoke connection 1409, shown blackened merely for illustrative purposes.

It is noted that the positions of the overall set of spoke connections 14011-14081, 1401r-1408r, 1409 are irregularly arranged about the rotation axis of wheel 11.

The additional spoke connection 1409 is adjacent to the position diametrically opposite the zone of the joint 132, on the opposite side with respect to the valve 7, and at a same angle of 3.75° with diameter D1.

The additional spoke connection 1409 is preferably equal to the other spoke connections 14011-14081 of the left side of the hub and/or to the other spoke connections 1401r-1408r of the right side of the hub. This obviates the need to manufacture a special spoke connection 1409, and/or to drill different spoke attachment seats 131 in rim 13.

Mass m3 of the additional spoke connection 1409 may however also be different from the mass of the other spoke connections 14011-14081 of the left side of the hub and/or of the other spoke connections 1401r-1408r of the right side of the hub.

A different mass m3 can be obtained through an increased or decreased mass of the spoke 1509 with respect to some or all of the remaining spokes, whereas the removable connection elements 16 of the wheel 11 are identical to each other.

A spoke 1509 of a greater mass m3 according to preferred embodiments represented in fig. 6 or fig. 7 has an intermediate portion 154 of greater cross-section with respect to the cross-sections of the ends bearing the head 151 and the outer threading 153, whereas the spokes of the spoke connections of the balanced sub-set 14011-14081, 1401r-1408r are substantially cylindrical for their entire length.

A spoke 1509 of a reduced mass m3 according to a preferred embodiment is represented in fig. 8, and analogously has an intermediate portion 155 of smaller cross-section with respect to the cross-sections of the ends bearing the head 151 and the outer threading 153, whereas the spokes of the spoke connections of the balanced sub-set 14011-14081, 1401r-1408r are substantially cylindrical for their entire length.

Although the intermediate portion 154, 155 with a greater or reduced diameter of the spokes illustrated in figs. 6 to 8 is centered, it could also be decentered towards either end, i.e. towards the rim or towards the hub, to increase or decrease the distance from the center of mass of the additional spoke connection 1409 to the center of the wheel. By arranging the intermediate portion 154, 155 closer to the rim side, the mass difference shall cause a greater centrifugal or centripetal force, easing the compensation or the partial reduction in imbalances of the wheel due to the localized mass increases of the joint zone 132 and the valve 7.

Moreover, the intermediate portion 154, 155 can be flattened to make the spoke aerodynamic.

By using an additional spoke 1509 as those of Figs. 6 to 8, the ends bearing the head 151 and the outer threading 153 of all seventeen spokes 15 of the spoke connections 14 are advantageously identical, so that the set of spoke connections 14 can be used with a hub 12 and a rim 13 wherein the spoke attachment seats 121, 131 are all identical.

As an alternative it is possible to make also the additional spoke 1409 cylindrical along its entire length and with a greater or smaller diameter than the spokes of spoke connections 14011-14081 and/or 1401r-1408r, then being however necessary to differentiate the spoke attachment seats in rim 13 and the removable connection elements 16.

A spoke 1509 of a different mass m3 can also be obtained by using a material having a different specific density, for example an additional spoke 1509 made of plastics will be lighter than spokes 14011-14081, 1401r-1408r of the balanced sub-set made of metal.

A still further alternative consists of differentiating, instead of the mass of the spoke of the additional spoke connection 1409, the mass of its removable connection element 16, in other words differentiating the mass of the internally threaded element or nipple 161 and/or of the plate 162 and/or in providing the plate 162 just in the spoke connections 14011-14081, 1401r-1408r of the balanced sub-set or respectively just in the additional spoke connection 1409, or in providing a different number of plates 162 in the spoke connections of the balanced sub-set and in the additional spoke connection 1409.

The difference in mass of the removable connection elements 16 can be obtained using two different types of material, e.g. by making that of the additional spoke connection 1409 in plastics, or else using different sizes of elements 161, 162 of the same material.

Although it is also possible to differentiate the masses of the removable connection elements when these are provided at the hub of the wheel instead of at the rim, such a solution is not particularly advantageous since the distance from the rotation axis would be very small and therefore a very large differentiation of mass would be needed.

Of course, it is also possible to distribute the greater or lesser mass between the spoke and the removable connection element of the additional spoke connection 1409.

The resultant of the centrifugal forces acting in the wheel 11 under dynamic conditions can be expressed by the following formula (1) wherein, just like in the subsequent formulae, vector values are indicated in bold type:

$$\mathbf{F} = \mathbf{F1} + \mathbf{F2} + \mathbf{F3} \qquad\qquad (1)$$

wherein the modules of the component forces are expressed by the following formulae:

$$F1 = m1 * \omega^2 * R1 \qquad\qquad (2)$$

$$F2 = m2 * \omega^2 * R2 \qquad\qquad (3)$$

$$F3 = m3 * \omega^2 * R3 \qquad\qquad (4)$$

wherein $\omega$ stands for the angular speed of the wheel 11, R1, R2 and R3 stand for the distances from the center of the wheel 11 of the centers of mass of the mass m1 of the joint 132, of the mass m2 of the valve 7, and of the mass m3 of the additional spoke connection 1409, respectively.

It should be noted that R1 and R2 are substantially equal to each other and substantially equal to the geometric radius R of the wheel 11, whereas R3, equal to half the length of the additional spoke connection 1409 added to the radius of the hub 12, is approximately half the geometric radius R of the wheel 11.

When the additional spoke 1509 has a non central intermediate portion as disclosed above, the center of mass of mass m3 is moved further towards or away from the rim 13 and therefore the distance R3 in the above formula (4) shall be greater or smaller, so that a smaller or greater mass m3 shall be used to reduce the imbalance of the wheel 11.

Furthermore, it is to be noted that the centrifugal force **F1** acts along the diameter D1 passing through the zone of the joint 132, while the centrifugal forces **F2** and **F3** have a component along the diameter D1 and a component perpendicular to the direction D1. The components of **F2** and **F3** along the diameter D1 act along an opposed direction with respect to the component of **F1** along the diameter D1, and the two components of **F2** and **F3** perpendicular to the diameter D1 act along opposed directions. Thus, the additional spoke connection 1409 has a component suitable for at least partially compensating for the resultant of the forces along diameter D1 due to the joint zone 132 and due to the valve 7, and a component suitable for at least partially compensate for the component perpendicular to the direction D1 of the centrifugal force due to the valve 7.

With suitable values of the mass m3 of the additional spoke connection 1409, the value of the resultant of the forces **F** gets close to zero and the dynamic imbalance of the wheel 11 reduces with respect to a wheel in which there are only the sixteen spoke connections 14011-14081, 1401r-1408r identical to each other or in any case such as to form a balanced sub-set.

Preferably, moreover, the additional spoke connection 1409 will not be tensioned, so that the wheel 11 will still be balanced from a static point of view. It should be understood that in the wheel 11 described above, the spoke connections 14011-14081 at the left hand side of the hub 12 could have a different mass from the spoke connections 1401r-1408r at the right hand side of the hub 12, for example because they form a different angle with the median plane of the wheel 11, and thus are of a different length. Also within the spoke connections of either side of the hub 12, there could be regular sub-sets of spoke connections of different mass, depending e.g. on whether they connect radially or tangentially to the hub and on whether they connect to the rim at the median plane thereof or not.

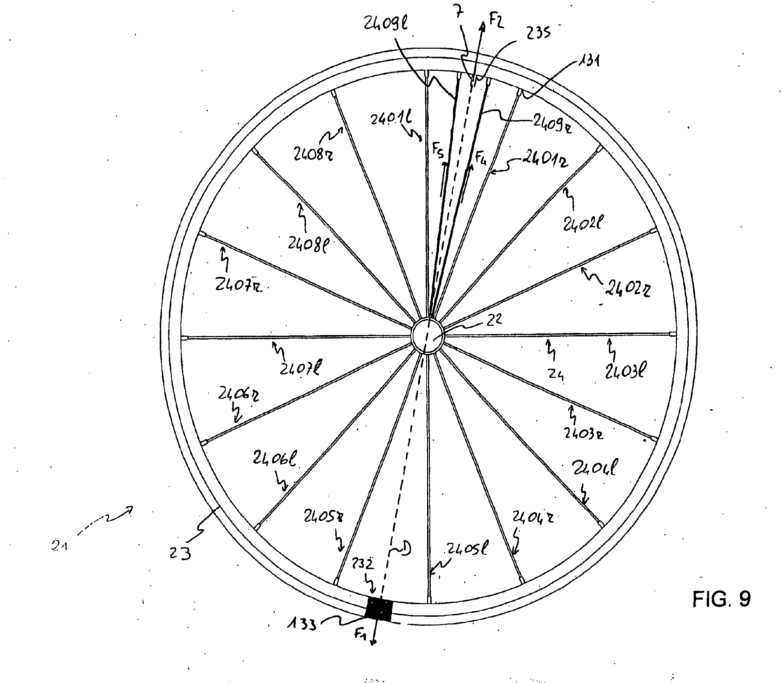

Fig. 9 represents a wheel 21, in particular a front wheel, according to a second embodiment of the invention.

The spoke pattern of the wheel 21 may again be seen as comprising a sub-pattern of the even type, comprising sixteen spoke connections 24011-24081, 2401r-2408r.

According to the invention, to reduce the dynamic imbalance of the wheel 21 due to the localized masses m1 of the joint zone 232 and m2 of the valve 7, it is provided to use two additional spoke connections 24091 and 2409r, shown blackened merely for illustrative purposes.

In the wheel 21, the hole 235 for the valve 7 is diametrically opposite the zone 232 of the joint along diameter D.

The additional spoke connections 24091 and 2409r are adjacent to the hole 235 for the valve 7, on opposite sides thereof with respect to the valve 7.

The resultant of the centrifugal forces acting in the wheel 21 under dynamic conditions can be expressed by the following formula (5):

$$F = F1 + F2 + F4 + F5 \qquad (5)$$

wherein

$$F4 = m4 * \omega^2 * R4 \qquad (6)$$

$$F5 = m5 * \omega^2 * R5 \qquad (7)$$

wherein R4 and R5 stand for the distances from the center of the wheel 21 of the centers of mass of the mass m4 of the additional spoke connection 2409r and of the mass m5 of the additional spoke connection 24091, respectively, and the remaining symbols are as described above.

It should be noted that the forces **F4** and **F5** each form an equal angle (of 3.75°) with the diameter D extending between the zone of the joint 232 and the valve 7, the diameter along which the forces **F1** and **F2** act, in opposite directions. The resultant of the two forces **F4** and **F5** therefore acts along the diameter D. The forces **F4** and **F5** also strictly speaking lie in planes parallel to the median plane of the wheel 21, but on opposite sides, and their effect is totally negligible on the dynamic behavior of the wheel 21.

With suitable values of the masses m4 and m5, the dynamic imbalance of the wheel 21 is reduced with respect to a wheel in which there are only the sixteen spoke connections 24011-24081, 2401r-2408r identical to each other or in any case such as to form a balanced sub-set.

The imbalance resulting from the presence of the sleeve 133 or other type of joint and of the valve 7 can be totally cancelled out with a suitable selection of values m4 and m5, obtaining perfect balance.

Advantageously, the additional masses m4 and m5 shall be selected equal to each other, but they can be different if e.g. the angles they form with diameter D are not equal.

The additional spoke connections 24091 and 2409r will preferably be identical to the other sixteen spoke connections, to avoid the need for special manufacture, and not tensioned, so that the wheel 21 will still be balanced from a static point of view.

In the previous embodiments, the assumption that the mass m1 of the joint is greater than the mass m2 of the valve was considered, since this is the most common situation. Those skilled in the art shall, however, understand that in case the mass m1 of the joint is, on the other hand, lower than the mass m2 of the valve, the solution described shall be applied *mutatis mutandis.*

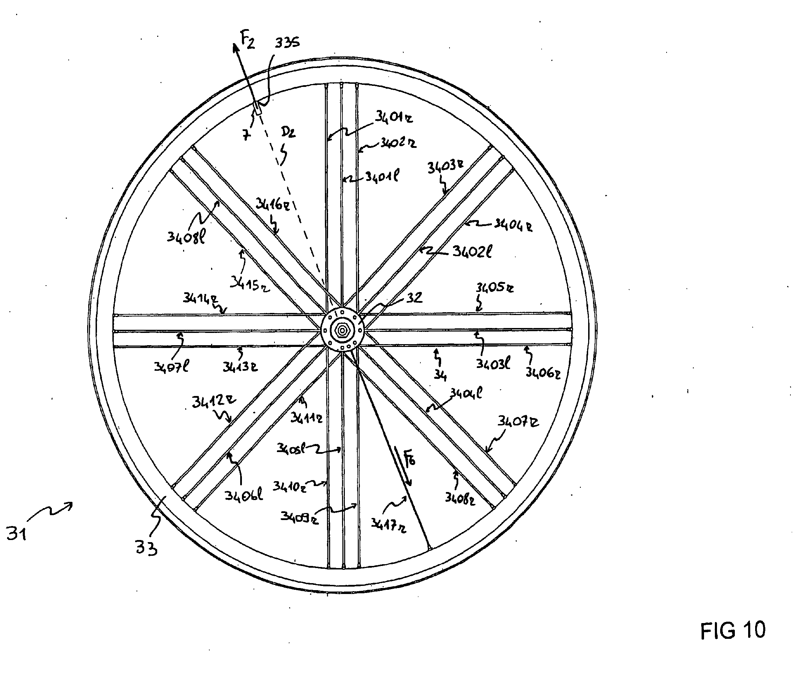

Fig. 10 represents a wheel 31, in particular a rear wheel, according to a third embodiment of the invention.

The spoke pattern of the wheel 31 may be seen as comprising a regular sub-pattern of the even type, comprising twenty-four spoke connections 34011-34081, 3401r-3416r grouped together in eight triplets.

In the wheel 31, the rim 33 is made from composite material, made by molding and reticulation or curing of a fibrous material, for example carbon fiber, in a matrix of polymeric material. The details on the manufacture of the rim 53 can be found for example in EP 1 231 077, incorporated herein by reference. The rim 33 is in a single piece, and therefore there isn't any joint.

Also in the case of the rim 33, there is nevertheless a localized mass discontinuity or increase, represented by the valve 7. As explained above, in the zone of the hole 335 for the valve 7 the thickness of the wall of the rim can be greater than in the rest of the rim 33. The additional mass due to the valve 7 and possibly to the greater thickness, minus the material removed from the hole 335 for the valve 7, is dynamically compensated for, according to the invention, through an additional spoke connection 3417r, in the position diametrically opposite the valve 7 (diameter D2). Also the spoke connection 3417r is shown blackened merely for illustrative purposes.

The resultant of the centrifugal forces acting in the wheel 31 under dynamic conditions can be expressed by the following formula (8):

$$F = F2 + F6 \qquad (8)$$

wherein

$$F6=m6*\omega^2*R6 \qquad\qquad (9)$$

wherein R6 stands for the distance from the center of the wheel 31 of the center of mass of mass m6 of the additional spoke connection 3417r, and the remaining symbols are as described above.

It should be noted that the force **F2**, i.e. the effect of the localized mass increase due to the valve 7, is parallel and opposite the force **F3**, i.e. the effect of the additional spoke connection 3417r.

Also in the case of the wheel 31, with a suitable value of mass m6 and of distance R6 it is possible to reduce or eliminate the dynamic imbalance with respect to a wheel in which there are only the twenty-four spoke connections 34011-34081, 3401r-3416r identical to each other or in any case such as to form a balanced sub-set.

The additional spoke connection 3417r will again preferably but not necessarily be identical to the other spoke connections 34011-34081 and/or 3401r-3416r, to avoid the need for special manufacture, and not tensioned, so that the wheel 31 will still be balanced from a static point of view.

It will be understood that a set of spoke connections that will reduce the imbalance or even dynamically balance the wheel once mounted and fitted with valve 7, may always be obtained by additional spoke connection(s) like in the disclosed embodiments irrespectively of the basic balanced sub-set of spoke connections, such as in even or odd type spoke patterns; in spoke patterns comprising groups of spokes, such as triplets, be them of the even type or of the odd type; in metal rims with joint and in rims made of composite material, thus lacking a joint. Any existing wheel may thus also be easily upgraded according to the invention.

It will further be understood that the number of additional spoke connections need not be only one or two, and that they need not be arranged in the same intraspoke zone as the valve or, more in general, as the lightest mass increase, or in the intraspoke zone opposite the single mass increase in case of rims without joint. Instead, the additional spoke connection/s may be arranged in intraspoke zone/s adjacent the intraspoke zone containing the lightest localized mass increase, or adjacent the intraspoke zone opposite the single mass increase in case of rims without joint.

When the zone of the joint is not diametrically opposite, or substantially opposite, with respect to the valve (e.g. when they are not in diametrically opposite infraspoke zones), a suitable number of additional spoke connection(s) of a suitable mass shall be arranged in a suitable position, for example in a position substantially opposite an intermediate position between the joint and the valve.

It is also possible to provide for a separate compensation of the localized mass discontinuities or increases represented by the jointing zone and by the valve, for example providing for one or two additional spoke connections substantially opposite the valve and one or two additional spoke connections substantially opposite the jointing zone.

In the case of rims with jointing like for example metal rims, it is in general possible to use any number of additional spoke connections in the half of the rim opposite the half centered about the greatest localized mass increase (typically the zone of the joint).

In the case of single-piece rims like for example rims made from composite material, it is in general possible to use any number of additional spoke connections in the half of the rim opposite the one centered about the single localized mass discontinuity or increase represented by the valve.

## Claims

1. Bicycle spoked wheel (11, 21, 31) comprising a hub (12, 22, 32), a rim (13, 23, 33) and a set of spoke connections (14, 24, 34) connecting the hub (12, 22, 32) and the rim (13, 23, 33), wherein the positions of the spoke connections of said set are irregularly arranged about the rotation axis of the wheel (11, 21, 31) to partly counter balance or to compensate for an imbalance due to at least one localized mass increase (133, 133a, 7) of the wheel (11, 21, 31).

2. Wheel according to claim 1, **characterized in that** said set of spoke connections (14, 24, 34 ) comprises a sub-set of spoke connections (14011-14081, 1401x-1408r; 24011,-24081, 2401r-2408r; 34011-34081, 3401r-3416r) balanced with respect to the rotation axis and at least one additional spoke connection (1409; 24091, 2409r; 3917r) .

3. Wheel according to claim 2, **characterized in that** said balanced sub-set of spoke connections (34) comprises groups of closer spoke connections (3401r, 3402r, 34011; 3403r, 3404r, 34021; 3405r, 3406r, 34031; 3407r, 3408r, 34041; 3409r, 3410x, 34051; 3911x, 3412r, 3413r, 3414r, 34071; 3415r, 3416r, 34081), said groups being regularly arranged about the rim (13, 23, 33).

4. Wheel according to claim 2 or 3, **characterized in that** said at least one additional spoke connection (1409; 24091, 2409r; 3417r) is/are not tensioned.

5. Wheel according to any of claims 2-4, **characterized in that** said at least one additional spoke connection (1409; 24091, 2409r; 3417r) is/are equal to at least some of the spoke connections (14011-14081, 1901r-1908r; 24011-24081, 2401r-2408r; 34011-34081, 3401r-3416r) of the balanced sub-set.

6. Wheel according to any of claims 2-4, **characterized in that** said at least one additional spoke connection (1409; 24091, 2409r; 3417r) has/have a different mass from at least some of the spoke connections (14011-14081, 1401r-1408r; 24011-24081, 2401r-2408r; 34011-34081, 3401r-3416r) of the balanced sub-set.

7. Wheel according to claim 6, **characterized in that** at least part of said at least one additional spoke connection (1409; 24091, 2409r; 3417r) is/are made of a material with different specific density from said at least some of the spoke connections (14011-14081, 1401r-1408r; 24011-24081, 2401r-2408r; 3901l-3908l, 3401r-3416r) of the balanced sub-set.

8. Wheel according to claim 7, **characterized in that** said at least one additional spoke connection (1409; 24091, 2409r; 3417r) is/are at least partly made of plastic.

9. Wheel according to any of claims 2-8, **characterized in that** said at least one additional spoke connection (1409; 3417r) comprises a single additional spoke connection.

10. Wheel according to any of claims 2-8, **characterized in that** said at least one additional spoke connection (24091, 2409r) comprise just two additional spoke connections.

11. Wheel according to any one of claims 2-10, wherein said wheel (11, 21, 31) comprises a first localized mass increase (133, 133a, 7) at a first position and said at least one additional spoke connection (1409; 24091, 2409r; 3417r) is/are arranged in the half of the rim opposite the half of the rim centered about said first position.

12. Wheel according to claim 11, wherein said at least one additional spoke connection (1409; 24091, 2409r; 3417r) is/are arranged substantially diametrically opposite said first position.

13. Wheel according to one of claims 11-12, wherein said wheel (11, 21) comprises a second localized mass increase (133, 133a, 7), smaller than the first localized mass increase (133, 13.3a, 7).

14. Wheel according to claim 13, wherein said second localized mass increase (133, 133a, 7) is in an infraspoke zone substantially diametrically opposite the first localized mass increase (133, 133a, 7).

15. Wheel according to one of claims 11-13, wherein said wheel further comprises a second localized mass increase (133, 133a, 7), smaller than said first localized mass increase (133, 133a, 7), at a second position, and said at least one additional spoke connection is/are further arranged in the half of the rim opposite the half of the rim centered about said second position.

16. Wheel according to claim 15, wherein said at least one additional spoke connection is/are arranged substantially diametrically opposite said second position.

17. Method of manufacturing a bicycle spoked wheel (11, 21, 31), comprising the step of providing a hub (12, 22, 32), a rim (13, 23, 33) and a set of spoke connections (14, 24, 34) for connection of the rim (13, 23, 33) and the hub (12, 22, 32), **characterized by** the step of connecting the spoke connections (14, 24, 34) at irregularly arranged positions about the rotation axis of the wheel (11, 21, 31) to partly counter balance or to compensate for an imbalance due to at least one localized mass increase of the wheel (7, 133, 133a).

18. Method according to claim 17, **characterized in that** said connecting step comprises connecting a sub-set of said spoke connections (14011-14081, 1401r-1408r; 24011-24081, 2401r-2908r; 34011-34081, 3901r-3916r) at regularly arranged positions about the rotation axis, and connecting at least one additional (1409; 24091, 2409r; 3417r) of said spoke connections substantially diametrically opposite at least one localized mass increase (7, 133, 133a) of the wheel.

19. Method according to claim 18, **characterized by** the step of tensioning only the spoke connections (14011-14081, 1901r-1908r; 24011-24081, 2401r-2408r; 3401l-3408l, 3401r-3416r) at positions regularly arranged.

20. Method according to claim 18 or 19, **characterized in that** said step of connecting a sub-set of said spoke connections (14011-14081, 1401r-1408r; 2401l-2408l, 2401r-2408r; 34011-34081, 3401r-3416r) at regularly arranged positions about the rotation axis comprises connecting spoke connections in groups of closer spoke connections (3401r, 3402r, 3401l; 3403r, 3404r, 34021; 3405r, 3406r, 34031; 3407r, 3408r, 34041; 3409r, 3410r, 34051; 3411r, 3412r, 34061; 3413r, 3414r, 3407l; 3415r, 3416r, 3408l.), said groups being regularly arranged about the rim (13, 23, 33).

**Patentansprüche**

1. Speichenrad (11, 21, 31) für Fahrräder, enthaltend eine Nabe (12, 22, 32), eine Felge (13, 23, 33) und einen Satz von Speichenverbindungen (14, 24, 34), die die Nabe (12, 22, 32) mit der Felge (13, 23, 33) verbinden, wobei die Positionen der Speichenverbindungen des Satzes unregelmäßig um die Drehachse des Rades (11, 21, 31) verteilt sind, um teilweise ein Gegengewicht für ein Ungleichgewicht infolge wenigstens eines lokalen Massenzuschlags (133, 133a, 7) des Rades (11, 21, 31) zu bilden oder dieses zu kompensieren.

2. Rad nach Anspruch 1, **dadurch gekennzeichnet**, das der Speichenverbindungssatz (14, 24, 34) einen Teilsatz von Speichenverbindungen (1401l-1408l, 1401 r-1408r; 2401l-2408l, 2401r-2408r; 34011-34081, 3401 r-3401 r), der im Bezug auf die Drehachse im Gleichgewicht ist, und wenigstens eine zusätzliche Speichenverbindung (1409; 2409l, 2409r; 3417r) enthält.

3. Rad nach Anspruch 3, **dadurch gekennzeichnet, dass** der sich im Gleichgewicht befindende Teilsatz von Speichenverbindungen (34) Gruppen engerer Speichenverbindungen (3401 r,3402r, 3401l; 3403r, 3404r, 34021; 3405r, 3406r, 34031; 3407r, 3408r, 34041; 3409r, 3410r, 34051; 3411r, 3412r, 34061; 3413r, 3414r, 34071; 3415r, 3416r, 34081) enthält, wobei diese Gruppen regelmäßig um die Felge (13, 23, 33) angeordnet sind.

4. Rad nach Anspruch 2 oder 3, **dadurch gekennzeichnet, dass** die wenigstens eine zusätzliche Speichenverbindung (1409; 24091, 2409r; 3417r) nicht gespannt ist.

5. Rad nach einem der Ansprüche 2 bis 4, **dadurch gekennzeichnet, dass** die wenigstens eine zusätzliche Speichenverbindung (1409; 24091, 2409r; 3417r) gleich wenigstens einiger der Speichenverbindungen (1401l-1408l, 1401r-1408r; 2401l- 24081, 2401r-2408r; 34011-34081, 3401r-3416r) des sich im Gleichgewicht befindenden Teilsatzes ist.

6. Rad nach einem der Ansprüche 2 bis 4, **dadurch gekennzeichnet, dass** die wenigstens eine zusätzliche Speichenverbindung (1409; 24091, 2409r; 3417r) eine andere Masse hat als wenigstens einige der Speichenverbindungen (14011-14081, 1401r-1408r; 2401l-2408l, 2401r-2408r; 34011-34081, 3401r-3416r) des sich im Gleichgewicht befindenden Teilsatzes.

7. Rad nach Anspruch 6, **dadurch gekennzeichnet, dass** wenigstens ein Teil der wenigstens einen zusätzlichen Speichenverbindung (1409; 24091, 2409r; 3417r) aus einem Material mit einer anderen spezifischen Dichte besteht als wenigstens einige der Speichenverbindungen (1401l-1408l, 1401 r-1408r; 24011-24081, 2401 r-2408r; 34011-34081, 3401r-3416r) des sich im Gleichgewicht befindenden Teilsatzes.

8. Rad nach Anspruch 7, **dadurch gekennzeichnet, dass** die wenigstens eine zusätzliche Speichenverbindung (1409; 24091, 2409r; 3417r) wenigstens teilweise aus Kunststoff besteht.

9. Rad nach einem der Ansprüche 2 bis 8, **dadurch gekennzeichnet, dass** die wenigstens eine zusätzliche Speichenverbindung (1409; 3417r) eine einzige zusätzliche Speichenverbindung enthält.

10. Rad nach einem der Ansprüche 2 bis 8, **dadurch gekennzeichnet, dass** die wenigstens eine zusätzliche Speichenverbindung (24091, 2409r) lediglich zwei zusätzliche Speichenverbindungen enthält.

11. Rad nach einem der Ansprüche 2 bis 10, wobei das Rad (11, 21, 31) einen ersten lokalen Massenzuschlag (133, 133a, 7) an einer ersten Position enthält und die wenigstens eine zusätzliche Speichenverbindung (1409; 24091, 2409r; 3417r) in der Hälfte der Felge gegenüberliegend der Hälfte der Felge angeordnet ist, die um die erste Position zentriert ist.

12. Rad nach Anspruch 11, bei dem die wenigstens eine zusätzliche Speichenverbindung (1409; 24091, 2409r; 3417r) im wesentlichen diametral gegenüberliegend der ersten Position angeordnet ist.

13. Rad nach einem der Ansprüche 11 bis 12, wobei das Rad (11, 21) einen zweiten lokalen Massenzuschlag (133, 133a, 7) enthält, der kleiner ist als der erste lokale Massenzuschlag (133, 133a, 7).

14. Rad nach Anspruch 13, bei dem sich der zweite lokale Massenzuschlag (133, 133a, 7) in einer Infraspeichenzone im wesentlichen diametral gegenüberliegend des ersten lokalen Massenzuschlages (133, 133a, 7) befindet.

15. Rad nach einem der Ansprüche 11 bis 13, wobei das Rad weiterhin einen zweiten lokalen Massenzuschlag (133, 133a, 7), der kleiner ist als der erste lokale Massenzuschlag (133, 133a, 7) ist, an einer zweiten Position enthält und die wenigstens eine zusätzliche Speichenverbindung weiterhin in der Hälfte der Felge gegenüberliegend der Hälfte der Felge angeordnet ist, die um die zweite Position zentriert ist.

16. Rad nach Anspruch 15, bei dem die wenigstens eine zusätzliche Speichenverbindung im wesentlichen diametral gegenüberliegend der zweiten Position angeordnet ist.

17. Verfahren zum Herstellen eines Speichenrades (11, 21, 31) für Fahrräder, umfassend den Schritt des Bereitstellens einer Nabe (12, 22, 32), einer Felge (13, 23, 33) und eines Satzes von Speichenverbindungen (14, 24, 34) für die Verbindung von Felge (13, 23, 33) und Nabe (12, 22, 32), **gekennzeichnet durch** den Schritt des Verbindens der Speichenverbindungen (14, 24, 34) an unregelmäßig angeordneten Positionen um die Drehachse des Rades (11, 21, 31), um teilweise ein Gegengewicht für ein Ungleichgewicht infolge wenigstens eines lokalen Massenzuschlags (133, 133a, 7) des Rades (11, 21, 31) zu bilden oder dieses zu kompensieren.

18. Verfahren nach Anspruch 17, **dadurch gekennzeichnet, dass** der Verbindungsschritt das Verbinden eines Teilsatzes der Speichenverbindungen (1401l- 1408l, 1401r-1408r; 2401l, 2401r-2408r; 3401l-3408l, 3401 r-3401 r) an regelmäßig angeordneten Positionen um die Drehachse und das Verbinden wenigstens einer zusätzlichen (1409; 2409l, 2409r; 3417r) der Speichenverbindungen im wesentlichen diametral gegenüberliegend wenigstens eines lokalen Massenzuschlags (7, 133, 133a) des Rades beinhaltet.

19. Verfahren nach Anspruch 18, **gekennzeichnet durch** den Schritt des Spannens lediglich der Speichenverbindungen (14011-14081, 1401r-1408r; 24011-24081, 2401r-2408r; 3401l-3408l, 3401r-3416r) an Positionen, die regelmäßig angeordnet sind.

20. Verfahren nach Anspruch 18 oder 19, **dadurch gekennzeichnet, dass** der Schritt des Verbindens eines Teilsatzes der Speichenverbindungen (14011-14081, 1401r-1408r; 2401l-2408l, 2401r-2408r; 34011-34081, 3401r-3416r) an regelmäßig angeordneten Positionen um die Drehachse das Verbinden von Speichenverbindungen in Gruppen engerer Speichenverbindungen (3401r r,3402r, 3401l; 3403r, 3404r, 34021; 3405r, 3406r, 34031; 3407r, 3408r, 34041; 3409r, 3410r, 34051; 3411r, r, 3412r, 34061; 3413r, 3414r, 34071; 3415r, 3416r, 34081) umfasst, wobei die Gruppen regelmäßig um die Felge (13, 23, 33) angeordnet sind.

## Revendications

1. Roue à rayons pour bicyclette (11, 21, 31) comprenant un moyeu (12, 22, 32), une jante (13, 23, 33) et un ensemble de connexions de rayon (14, 24, 34) connectant le moyeu (12, 22, 32) et la jante (13, 23, 33), dans laquelle les positions des connexions de rayon dudit ensemble sont agencées irrégulièrement autour de l'axe de rotation de la roue (11, 21, 31) pour contrebalancer partiellement ou pour compenser un déséquilibre dû à au moins une augmentation de masse localisée (133, 133a, 7) de la roue (11, 21, 31).

2. Roue selon la revendication 1, **caractérisée en ce que** ledit ensemble de connexions de rayon (14, 24, 34) comprend un sous-ensemble de connexions de rayon (1401l-1408l, 1401r-1408r; 24011-24081, 2401r-2408r; 3401l-3408l, 3401r-3416r) équilibré par rapport à l'axe de rotation et au moins une connexion de rayon supplémentaire (1409 ; 24091, 2409r ; 3417r).

3. Roue selon la revendication 2, **caractérisée en ce que** ledit sous-ensemble équilibré de connexions de rayon (34) comprend des groupes de connexions de rayon plus proches (3401r, 3402r, 3401l ; 3403r, 3404r, 34021 ; 3405r, 3406r, 34031 ; 3407r, 3408r, 34041 ; 3409r, 3410r, 34051 ; 3411r, 3412r, 34061 ; 3413r, 3414r, 3447l ; 3415r, 3416r, 34081), lesdits groupes étant agencés régulièrement autour de la jante (13, 23, 33).

**4.** Roue selon la revendication 2 ou 3, **caractérisée en ce que** ladite au moins une connexion de rayon supplémentaire (1409 ; 2409l, 2409r; 3417r) n'est pas tendue.

**5.** Roue selon l'une quelconque des revendications 2 à 4, **caractérisée en ce que** ladite au moins une connexion de rayon supplémentaire (1409 ; 2409l, 2409r ; 3417r) est égale à au moins certaines des connexions de rayon (14011-14081, 1401r-1408r; 24011-24081, 2401r-2408r; 34011-34081, 3401r-3416r) du sous-ensemble équilibré.

**6.** Roue selon l'une quelconque des revendications 2 à 4, **caractérisée en ce que** ladite au moins une connexion de rayon supplémentaire (1409 ; 2409l, 2409r ; 3417r) possède une masse différente d'au moins certaines des connexions de rayon (14011-14081, 1401r-1408r; 2401l-2408l, 2401r-2408r; 34011-34081, 3401r-3416r) du sous-ensemble équilibré.

**7.** Roue selon la revendication 6, **caractérisée en ce qu'**au moins une partie de ladite au moins une connexion de rayon supplémentaire (1409 ; 2409l, 2409r ; 3417r) est faite d'un matériau avec une densité relative différente desdites au moins certaines connexions de rayon parmi les connexions de rayon (1401l-1408l, 1401r-1408r ; 2401l-2408l, 2401r-2408r ; 3401l-3408l, 3401 r-3416r) du sous-ensemble équilibré.

**8.** Roue selon la revendication 7, **caractérisée en ce que** ladite au moins une connexion de rayon supplémentaire (1409 ; 2409l, 2409r ; 3417r) est au moins partiellement constituée de plastique.

**9.** Roue selon l'une quelconque des revendications 2 à 8, **caractérisée en ce que** ladite au moins une connexion de rayon supplémentaire (1409 ; 3417r) comprend une connexion de rayon supplémentaire unique.

**10.** Roue selon l'une quelconque des revendications 2 à 8, **caractérisée en ce que** ladite au moins une connexion de rayon supplémentaire (2409l, 2409r) comprend juste deux connexions de rayon supplémentaires.

**11.** Roue selon l'une quelconque des revendications 2 à 10, dans laquelle ladite roue (11, 21, 31) comprend une première augmentation de masse localisée (133, 133a, 7) à une première position et ladite au moins une connexion de rayon supplémentaire (1409 ; 2409l, 2409r ; 3417r) est agencée dans la moitié de jante située en face de la moitié de jante centrée autour de ladite première position.

**12.** Roue selon la revendication 11, dans laquelle ladite au moins une connexion de rayon supplémentaire (1409 ; 2409l, 2409r ; 3417r) est agencée de façon sensiblement diamétralement opposée à de ladite première position.

**13.** Roue selon l'une des revendications 11 à 12, dans laquelle ladite roue (11, 21) comprend une seconde augmentation de masse localisée (133, 133a, 7), inférieure à la première augmentation de masse localisée (133, 133a, 7).

**14.** Roue selon la revendication 13, dans laquelle ladite seconde augmentation de masse localisée (133, 133a, 7) est dans une zone de rayon inférieure située de façon sensiblement diamétralement opposée à la première augmentation de masse localisée (133, 133a, 7).

**15.** Roue selon l'une des revendications 11 à 13, dans laquelle ladite roue comprend en outre une seconde augmentation de masse localisée (133, 133a, 7), inférieure à ladite première augmentation de masse localisée (133, 133a, 7), à une seconde position, et ladite au moins une connexion de rayon supplémentaire est en outre agencée dans la moitié de jante située en face de la moitié de jante centrée autour de ladite seconde position.

**16.** Roue selon la revendication 15, dans laquelle ladite au moins une connexion de rayon supplémentaire est agencée de façon sensiblement diamétralement opposée à ladite seconde position.

**17.** Procédé de fabrication d'une roue à rayons pour bicyclette (11, 21, 31), comprenant l'étape consistant à fournir un moyeu (12, 22, 32), une jante (13, 23, 33) et un ensemble de connexions de rayon (14, 24, 34) pour une connexion de la jante (13, 23, 33) et du moyeu (12, 22, 32), **caractérisé par** l'étape consistant à connecter les connexions de rayon (14, 24, 34) dans des positions agencées irrégulièrement autour de l'axe de rotation de la roue (11, 21, 31) pour contrebalancer partiellement ou pour compenser un déséquilibre dû à au moins une augmentation de masse localisée de la roue (7, 133, 133a).

**18.** Procédé selon la revendication 17, **caractérisé en ce que** ladite étape de connexion comprend les étapes consistant à connecter un sous-ensemble desdites connexions de rayon (14011-14081, 1401r-1408r; 24011-2408l, 2401r-2408r ; 3401l-3408l, 3401r-3416r) dans des positions agencées régulièrement autour de l'axe de rotation, et connecter au moins une connexion supplémentaire (1409 ; 24091, 2409r ; 3417r) parmi lesdites connexions de rayon de façon sensiblement diamétralement opposée à au moins une augmentation de masse localisée (7, 133, 133a) de la roue.

**19.** Procédé selon la revendication 18, **caractérisé par** l'étape consistant à tendre uniquement les connexions de rayon (1401l-1408l, 1401r-1408r; 24011-24081, 2401r-2408r ; 34011-34081, 3401r-3416r) dans des positions agencées régulièrement.

**20.** Procédé selon la revendication 18 ou 19, **caractérisé en ce que** ladite étape de connexion d'un sous-ensemble desdites connexions de rayon (1401l-1408l, 1401r-1408r ; 2401l-2408l, 2401r-2408r; 34011-34081, 3401r 3416r) dans des positions agencées régulièrement autour de l'axe de rotation comprend l'étape consistant à connecter des connexions de rayon dans des groupes de connexions de rayon plus proches (3401 r, 3402r, 3401l ; 3403r, 3404r, 34021 ; 3405r, 3406r, 34031 ; 3407r, 3408r, 34041 ; 3409r, 341 Or, 34051 ; 3411r, 3412r, 3406l ; 3413r, 3414r, 3407l ; 3415r, 3416r, 34081), lesdits groupes étant agencés régulièrement autour de la jante (13, 23, 33).

FIG. 1

FIG. 2

FIG. 5

133a

133

FIG. 3

13

134

133

FIG. 4

EP 1 759 878 B1

FIG. 6

FIG. 7

FIG. 8

FIG. 9

EP 1 759 878 B1

FIG 10

**EP 1 759 878 B1**

**Patent documents cited in the description**

- US 20020033635 A
- EP 0936085 A
- EP 044256527 A
- EP 1231077 A